Europäisches Patentamt

(19) European Patent Office

Office européen des brevets

(11) Publication number: **0 205 304 B1**

# (12) EUROPEAN PATENT SPECIFICATION

(45) Date of publication of patent specification:
06.03.91 Bulletin 91/10

(51) Int. Cl.⁵: **B65D 81/34, B32B 15/04, B32B 33/00**

(21) Application number: 86304224.8

(22) Date of filing: 03.06.86

(54) Package for microwave cooking.

(30) Priority: 06.06.85 CA 483336

(43) Date of publication of application:
17.12.86 Bulletin 86/51

(45) Publication of the grant of the patent:
06.03.91 Bulletin 91/10

(84) Designated Contracting States:
AT BE CH DE FR GB IT LI LU NL SE

(56) References cited:
EP-A- 0 114 154
US-A- 4 230 924
US-A- 4 258 086
US-A- 4 398 944

(73) Proprietor: Beckett, Donald Edward
963 Tennyson Avenue
Mississauga Ontario, L5H 2Y9 (CA)

(72) Inventor: Beckett, Donald Edward
963 Tennyson Avenue
Mississauga Ontario, L5H 2Y9 (CA)

(74) Representative: Miller, Joseph et al
J. MILLER & CO. Lincoln House 296-302 High Holborn
London WC1V 7JH (GB)

## Description

The present invention relates to a package for use in microwave cooking.

The microwave cooking of foods provided in baglike enclosures is known. It is sometimes desirable to provide a metallized region adjacent the food to increase the concentration of energy and provide a more rapid cooking cycle. These currently lack any convenient manner of readily providing such structure.

In US-A-4,258,086 and in US-A-4,230,924 there is disclosed a package for use in the microwave cooking of a foodstuff, the package employing in its construction a laminate comprising a layer of metallized flexible polymeric material which has been demetallized to provide at least one discrete, microwave-heatable, metallized region on one surface thereof with the remainder of the surface demetallized and at least one layer of other material. The said laminate is suggested for use in the browning of foods and for this purpose is provided with a multiplicity of small metallic islands with gaps therebetween. Such a laminate, however, would be unsuitable for formation into a package in which the foodstuff is to be properly cooked, as opposed to merely being browned, by microwave cooking because most of the package would not be in contact with the foodstuff and consequently the generation of heat in the parts of the package not in contact with the foodstuff would damage these parts. Furthermore, the part of the package in contact with the foodstuff would not be very efficient in heating the foodstuff because of the presence of the gaps between the said metallic islands.

According, therefore, to the present invention, there is provided a package for use in the microwave cooking of a foodstuff, the package employing in its construction a laminate comprising a layer of metallized flexible polymeric material which has been demetallized to provide at least one discrete, microwave-heatable, metallized region on one surface thereof with the remainder of the surface demetallized, and at least one layer of other material characterised in that the package has a bottom wall at least a part of which is provided with a said discrete metallized region which is continuous and a top wall which is not provided with a metallized region.

The discrete metallized region may be located on a polymeric material sheet so as to be positioned in the localized region of the foodstuff, when the laminate is formed into an enclosure housing the same, but not elsewhere, for the purpose of cooking by the application of microwave energy.

Preferably, the laminate is provided by a metallized flexible polymeric material layer sandwiched between two relatively-stiff paper layers.

By providing a flexible polymeric sheet having discrete metallized regions on one surface thereof, lamination with additional layers to provide stability and strength is readily achieved by conventional in-line laminating operations.

The package of the present invention may be used in a method of cooking by the application of microwave energy, which comprises enclosing a microwavable foodstuff in the package so that a discrete metallized region is adjacent the foodstuff, and applying microwave energy to the package and the foodstuff therein while the metallized region is located on the opposite side of the foodstuff from the source of microwave energy.

One convenient foodstuff which may be formed by the present invention is popcorn. Popping corn and butter are positioned in the package which is folded generally flat but which has a sufficient volume to accommodate the corn when popped.

In the present invention, there may be employed a polymeric material film which has discrete metallized regions on one surface. This film may be formed by selective demetallization of a metallized polymeric film.

The substrate polymer film may be any convenient flexible polymeric material chemically resistant to an etchant and typically is a polyester material, for example, that sold under the trade mark "Mylar". The polymer material usually is transparent but may be translucent.

The metal film adhered to the polymeric film may be any convenient metal which can be removed from the surface of the substrate by chemical etching. The metal usually is aluminium, but other etchable metals, such as copper, may be used. The thickness of the metal film may vary widely within the range of about 100-10,000 nm (10 to about 1000 Å), preferably about 3000-6000 nm (300 to about 600 Å), and may vary in appearance from opaque to transparent. In the case of aluminium, the chemical etchant commonly is aqueous sodium hydroxide solution.

Selective demetallization of metallized polymeric films may be effected on a continuous basis on a web of metallized polymeric material, as described, for example, in my US-A-4,398,994 and my US-A-4,552,614 and in my United States Patent Application No. 723,909, filed April 16, 1985, now US-A-4,610,755.

As set forth therein, a pattern of demetallized regions may be formed on the web by a variety of techniques which involve etching of predetermined regions of the web using, for example, an aqueous etchant to remove the metal from those regions while leaving the remainder of the metal surface unaffected.

The continuous procedures described in my prior patents and application enable the desired metallized regions to be provided on the polymeric material web rapidly and readily. The patterned web that results from the selective demetallization is in a convenient form for lamination with other materials to form the packaging laminate. The lamination operation may be effected using conventional laminating techniques. The lamination operation may be effected in-line with the demetallizing step or may be effected in a separate operation on a reel of selectively demetallized polymeric material. The laminate, therefore, may be easily and readily formed using existing laminating techniques and equipment.

Lamination of the selectively demetallized polymeric film is required in order to prevent distortion and deformation in the metallized region upon the application of microwave energy. For this reason, the layer or layers to which the polymeric film is laminated should be relatively stiff, such as to resist deformation and distortion during the application of microwave energy. Usually, the selectively demetallized polymeric film is sandwiched between two other layers, but for some uses lamination with a single other layer is possible.

The layer or layers to which the demetallized patterned film is laminated may be another polymeric film, a paper sheet or any other convenient packaging material. The laminate may be formed into packages for use in the microwave heating of foodstuffs by any convenient technique, depending on the intended use of the package.

The laminate is shaped into the packaging structure so that the metallized region usually provides part or all of one surface of the package on which the foodstuff is to rest for cooking. Microwave energy then is applied to an opposite surface of the package, so that the microwave energy, in addition to heating the foodstuff in conventional manner, also heats the foodstuff by reason of concentration of the microwave energy in the metal layer, thereby heating up the metal layer, and heating the foodstuff by conduction from the heated metal layer. In this way, the foodstuff is rapidly heated.

The package structure provided in accordance with this invention is useful for a wide variety of food products, especially where conduction heat is desirable. As mentioned above, one application is in the formation of popcorn by microwave heating of popping corn located in the package. Other applications are in the reconstitution and/or cooking of frozen food products where a crisping or browning effect is desirable, for example, in the reconstitution of frozen french fries and frozen pizzas.

The amount of microwave energy which is converted into conduction heat by the utilization of a discrete metallized region or regions on the polymeric film may be varied by varying the area of the metallized region through variation of the demetallization procedure. It is also appreciated that the density of the deposited metal should be controlled. The density of the deposited metal in the remaining metallized area is such to avoid overheating or burning of the package and product during the microwave heating.

The invention is described, by way of illustration, with reference to the accompanying drawings, in which :

Figure 1 is a schematic representation of the package-forming operations provided in accordance with one embodiment of the invention ;

Figure 2 is a perspective view of a web of polymeric material illustrating the presence of discrete metallized regions ;

Figure 3 is a perspective view, with parts cut away for clarity, of a package structure containing a foodstuff, provided in accordance with one embodiment of the invention ; and

Figures 4A and 4B are detailed sectional views taken at lines A-A and B-B respectively of Figure 3.

Referring to Figure 1, there is illustrated therein a packaging line 10 comprising a demetallizing station 12, a laminating station 14 and a packaging or forming station 16. While the stations 12, 14 and 16 are illustrated as being in-line, the stations may effect discrete operations or two of the stations may be operated in-line, as desired.

A web 19 (Figure 2) of metallized polymeric material is fed by line 18 to the demetallizing station wherein the web is subjected to selected demetallization to remove the metal from desired regions of the metallized surface of the web and leave other discrete metallized regions unaffected.

As may be seen in Figure 2, a pattern of rectangular metallized regions 20 may be provided with the intervening areas 22 free from metallization. Any desired pattern consistent with the desired end use and dimensions of the web 19 may be employed.

Selective demetallizing of the web 19 may be effected in any convenient manner to form the desired pattern of metallized 20 and demetallized 22 regions on the web, for example, any of the procedures described in my aforementioned U.S. Patent and Pending Applications.

Following demetallizing, the web 19 is fed by line 24 to a laminating station 14 where the demetallized web 19 is laminated with a pair of paper webs 26 and 28. Any convenient in-line laminating technique may be employed. The paper used to provide the webs 26 and 28 may be of any desired form, usually is stiff relative to the polymeric web 19 but still sufficiently flexible to permit ready formation of the resulting laminate into a packaging material.

The laminate of the polymeric material web 19 sandwiched between the paper webs 26 and 28 is forwarded by line 30 to the forming station 16 wherein the laminate is formed into a package of desired shape by conventional forming techniques. The package is removed by line 32.

In Figures 3 and 4, there is illustrated a typical package construction provided in this invention. As seen therein, a package structure 50 is formed from a laminate of outer layers 52 and 54 and a polymeric material layer 56 which has a discrete metallized region 58 provided in the bottom wall 60 of the package.

The package structure 50 encloses a foodstuff 62 for heating by microwave energy 64 applied through the top wall 66 of the package 50. The microwave energy 64 passes through the top wall 66 since there is no metallized region, as a result of demetallizing of the polymeric film 56. The microwave energy 64 heats the foodstuff 62 by the usual mechanism but also the presence of the metallized region 58 causes the foodstuff to be heated also by conduction therefrom.

The present invention enables improved microwave cooking procedures to be adopted for certain foodstuffs and further permits in-line techniques to be employed in the formation of packages for use therein.

## Claims

1. A package (50) for use in the microwave cooking of a foodstuff, the package (50) employing in its construction a laminate (52, 54, 56, 58) comprising a layer (56) of metallized flexible polymeric material which has been demetallized to provide at least one discrete, microwave-heatable, metallized region (58) on one surface thereof with the remainder of the surface demetallized, and at least one layer (52, 54) of other material characterised in that the package (50) has a bottom wall (60) at least a part of which is provided with a said discrete metallized region (58) which is continuous and a top wall (66) which is not provided with a metallized region.

2. A package as claimed in claim 1, characterised in that the at least one layer of other material comprises a layer (52, 54) of reinforcing paper material laminated to at least one side of a polymer film (56) over substantially the entire surface area thereof.

3. A package as claimed in claim 2, characterised in that there are two layers (52, 54) of reinforcing paper material laminated to the polymer film (56), one paper layer being laminated to either side of the film.

4. A package as claimed in any preceding claim characterised in that the material was demetallized by an etching process.

5. A package as claimed in any preceding claim characterised in that there is only one said discrete region.

## Ansprüche

1. Verpackung (50) zum Gebrauch beim Erhitzen von Nahrungsmitteln im Mikrowellenherd, wobei die Verpackung (50) im Aufbau ein Laminat (52, 54, 56, 58) aufweist, mit einer Lage (56) metallisiertem flexiblen polymerischen Material, das demetallisiert wurde, um zumindest eine bestimmte mikrowellenerhitzbare metallisierte Region (58) auf einer Oberfläche bereitzustellen, wobei der Rest der Oberfläche demetallisiert ist, und zumindest eine Lage (52, 54) aus anderem Material, dadurch **gekennzeichnet**, daß die Verpackung (50) eine Bodenwandung (60) besitzt, von der zumindest ein Teil mit der genannten diskreten metallisierten Region (58) ausgestattet ist, die kontinuierlich verläuft, und mit einer oberen Wand (66), die keine metallisierte Region aufweist.

2. Verpackung nach Anspruch 1, dadurch **gekennzeichnet**, daß die zumindest eine Lage des anderen Materials aus einer Lage (52, 54) aus verstärkendem Papiermaterial besteht, das auf zumindest eine Seite eines polymerfilms (56).

3. Verpackung nach Anspruch 2, dadurch **gekennzeichnet**, daß zumindest zwei Lagen (52, 54) aus verstärkendem Papiermaterial, laminiert auf den Polymerfilm (56), vorgesehen sind, wobei auf jeder Seite des Film jeweils eine Papierlage laminiert ist.

4. Verpackung nach einem der vorangehenden Ansprüche, dadurch **gekennzeichnet**, daß das Materials mittels eines Ätzverfahrens demetallisiert ist.

5. Verpackung nach einem der vorangegangenen Ansprüche, dadurch **gekennzeichnet**, daß es nur eine diskrete Region gibt.

## Revendications

1. Un emballage (50) à utiliser dans la cuisson d'un aliment, l'emballage (50) utilisant dans sa construction un stratifié (52, 54, 56, 58) comprenant une couche (56) d'un matériau polymère flexible métallisé qui a été démétallisé pour donner au moins une région métallisée distincte, chauffable par les micro-ondes (58) sur une de ses faces, le reste de la surface étant démétallisé, et au moins une couche (52, 54) d'un autre matériau, caractérisé en ce que l'emballage (50) possède une paroi inférieure (60), dont au moins une partie est munie d'une telle région métallisée distincte (58) qui est continue, et une paroi supérieure (66) sans région métallisée.

2. Un emballage selon la revendication 1, caractérisé en ce que ladite couche au moins d'un autre matériau comprend une couche (52, 54) de papier de renforcement stratifiée sur au moins une face d'un film de polymère (56) pratiquement sur toute sa surface.

3. Un emballage selon la revendication 2, caractérisé en ce qu'il y a deux couches (52, 54) de papier de renforcement stratifiées sur le film de polymère (56), une couche de papier étant stratifiée sur chaque face du film.

4. Un emballage selon l'une quelconque des revendications précédentes, caractérisé en ce que le matériau a été démétallisé par un procédé de décapage.

5. Un emballage selon l'une quelconque des revendications précédentes, caractérisé en ce qu'il y a seulement une telle région distincte.